(19) Europäisches Patentamt
European Patent Office
Office européen des brevets

(11) **EP 2 704 934 B1**

(12) **EUROPÄISCHE PATENTSCHRIFT**

(45) Veröffentlichungstag und Bekanntmachung des Hinweises auf die Patenterteilung:
**14.03.2018   Patentblatt 2018/11**

(21) Anmeldenummer: **12715914.3**

(22) Anmeldetag: **13.04.2012**

(51) Int Cl.:
**B60W 20/00** *(2016.01)*          **B60W 50/00** *(2006.01)*
**B60W 10/06** *(2006.01)*          **B60W 10/08** *(2006.01)*

(86) Internationale Anmeldenummer:
**PCT/EP2012/056731**

(87) Internationale Veröffentlichungsnummer:
**WO 2012/150113 (08.11.2012 Gazette 2012/45)**

(54) **VERFAHREN ZUM BETREIBEN EINES HYBRIDANTRIEBS**

METHOD FOR OPERATING A HYBRID DRIVE

PROCÉDÉ DE FONCTIONNEMENT D'UN ENTRAÎNEMENT HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2011   DE 102011075226**

(43) Veröffentlichungstag der Anmeldung:
**12.03.2014   Patentblatt 2014/11**

(73) Patentinhaber: **Bayerische Motoren Werke Aktiengesellschaft
80809 München (DE)**

(72) Erfinder:
• **CHRIST, Thomas
  81245 München (DE)**
• **GRETZSCHEL, Moritz
  82166 Graefelfing (DE)**

(56) Entgegenhaltungen:
**EP-A2- 1 270 303          WO-A1-2010/058267
DE-A1-102008 056 858          DE-A1-102009 000 043
US-A1- 2006 278 449**

**Beschreibung**

Die vorliegende Erfindung betrifft ein Verfahren zum Betreiben eines Hybridantriebs gemäß dem Oberbegriff des Patentanspruches 1.
Ein derartiges Verfahren ist aus der US 2006/0278449 A bekannt. Zum technischen Hintergrund der Erfindung zählen die DE 10 2008 056 858 A, DE 10 2009 000 043 A1, EP-A- 1 270 303, sowie die WO 2010/058267 A.

Aus der DE 10 2006 033 930 A1 der Robert Bosch GmbH ist ein Verfahren zum Betreiben eines Hybridantriebs eines Fahrzeugs bekannt, bei dem für eine zu durchfahrende Fahrstrecke zunächst ein Fahrprofil ermittelt wird und der Verbrennungsmotor und die elektrische Maschine des Hybridantriebs in Abhängigkeit von aus der Ermittlung des Fahrprofils gewonnen Betriebsparametern gesteuert werden. Das "Fahrprofil" kann sich aus einer Vielzahl unterschiedlicher Kenngrößen, wie z. B. Streckenlänge, Höhenprofil, Position von Kreuzungen und/oder Ampelanlagen, Straßenklasse, Höhenprofil etc. ergeben. Ferner können Kenngrößen manuell über ein Navigationssystem vorgegeben werden. Ausdrücklich erwähnt ist, dass die Betriebsstrategie hinsichtlich mindestens eines der Kriterien Kraftstoffverbrauch, Schadstoffemission, Ladezustand und/oder Lebensdauer des elektrischen Speichers ausgewählt wird. Der DE 10 2006 033 930 A1 ist nicht zu entnehmen, wie "vorausschauend" das dort beschriebene Verfahren angelegt ist.
Bei vielen der bekannten Betriebsstrategien für Hybridfahrzeuge ist der "Steuerungshorizont" sehr begrenzt. Bei manchen Betriebsstrategien erfolgt die Steuerung sogar rein situativ, d. h. allein aufgrund momentaner Fahrzustands- bzw. Systemparameter.

Aufgabe der Erfindung ist es, ein Verfahren zum Betreiben eines Hybridantriebs zu schaffen, mit dem sich der Einsatz der im Fahrzeug vorhandenen Antriebsenergie (in Form von Kraftstoff und elektrischer Energie) noch optimaler Einsetzen lässt.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist die Erkenntnis, dass eine auf den aktuellen Betriebspunkt des Fahrzeugs ausgelegte Hybridbetriebsstrategie lediglich ein suboptimales Ergebnis liefert. Es wurde erkannt, dass der Steuerungshorizont der Betriebsstrategie deutlich erweitert werden muss, um auch bei längeren Fahrten, bei der eine ganze Tankfüllung oder mehr Kraftstoff verbraucht werden, die Energie optimal eingesetzt wird.

Ein wesentlicher Grundgedanke der Erfindung besteht in der Beschreibung der zugrundeliegenden Aufgabe als "umgekehrtes Rucksackproblem". Konkret geht es darum, dass der Fahrer eines Hybridfahrzeugs, insbesondere eines so genannten "Plug-In-Hybrids", den im Fahrzeug befindlichen elektrischen Energiespeicher auflädt und die im Fahrzeug gespeicherte elektrische Energie für "elektrisches Fahren" so einsetzen möchte, dass er möglichst viel Kraftstoff, der zum Antrieb des Verbrennungsmotors des Fahrzeugs verwendet wird, spart. Hieraus ergibt sich die Frage, welche Routenabschnitte einer vorgegebenen Fahrtroute bevorzugt unter Einsatz des Elektroantriebs des Fahrzeugs befahren werden sollten. Mithin legt die Betriebsstrategie gemäß der Erfindung fest, welche verbrennungsmotorischen Betriebsmodus oder in einem zweiten, rein elektromotorischen Betriebsmodus befahren werden sollten bzw. einem dritten Betriebsmodus (z. B. kombinierter verbrennungsmotorischer und elektromotorischer Betrieb).

Gemäß der Erfindung wird vor Beginn einer Fahrt die Fahrtroute zwischen einem Startpunkt und einem Zielpunkt nach einer vorgegebenen Logik in mehrere Routenabschnitte zerlegt. Aus den Routenabschnitten werden diejenigen Routenabschnitte (vor)selektiert, die aufgrund bestimmter Routenabschnittskriterien überhaupt für ein Befahren im zweiten Betriebsmodus, d. h. für ein Befahren im rein elektromotorischen Betrieb in Betracht kommen. Aus diesen selektierten Routenabschnitten wiederum werden diejenigen identifiziert und schließlich im zweiten Betriebsmodus durchfahren, bei denen ein Durchfahren im zweiten Betriebsmodus in Summe einen maximalen Verbrauchsvorteil gegenüber einem Befahren im ersten oder einem anderen Betriebsmodus erbringt.

Wie bereits erwähnt, deckt der Steuerungshorizont eine beliebig lange Fahrtroute ab. Anders ausgedrückt wird unabhängig von der Länge der Fahrtroute stets die gesamte Fahrtroute analysiert, d. h. in einzelne Routenabschnitte zerlegt, hieraus für ein Befahren im zweiten Betriebsmodus in Frage kommende Routenabschnitte selektiert und aus den selektierten Routenabschnitten diejenigen Routenabschnitte identifiziert, bei denen sich in Summe ein maximaler Verbrauchsvorteil bei einem Befahren im zweiten Betriebsmodus gegenüber einem Befahren im ersten oder einem anderen Betriebsmodus ergibt.

Dieses dem ersten Anschein nach einfach erscheinende Betriebskonzept ist insbesondere bei längeren Fahrtrouten von mehreren hundert Kilometern mit einem hohen Rechenaufwand verbunden. Ein wesentlicher Vorteil der Erfindung besteht jedoch darin, dass die Analyse der Fahrtroute auch im Vorfeld einer Fahrt, durchgeführt werden kann.

Das Zerlegen der Fahrtroute in einzelne Routenabschnitte erfolgt nach einer vorgegebenen Logik. Das Zerlegen kann in Abhängigkeit mehrerer unterschiedlicher Zerlegungskriterien erfolgen. Beispielsweise kann nach einer vorgegebenen Logik untersucht werden, mit welcher erwarteten Durchschnittsgeschwindigkeit entlang der Route zu rechnen ist. Streckenabschnitte mit ähnlicher Durchschnittsgeschwindigkeit können dann zu einem längeren Routenabschnitt zusammengefasst werden. Dabei können auch Information wie z. B. Straßentyp (Autobahn, Landstraße, Straße innerhalb geschlossener Ortschaften, Geschwindigkeitsbeschränkungen, Steigungen, Gefälle etc.) eingehen.

Als wesentliches Entscheidungskriterium, ob ein derart gebildeter Routenabschnitt für ein Durchfahren im zweiten Betriebsmodus überhaupt in Betracht kommt, kann die geschätzte Durchschnittsgeschwindigkeit herangezogen werden.

Anschließend wird - anschaulich gesprochen - jedem Routenabschnitt ein "Preisschild" mit zwei Angaben zugeordnet, nämlich

> 1. der Angabe, wie groß der sich bei einem Durchfahren des betreffen-den Routenabschnitts im zweiten Betriebsmodus gegenüber einem Durchfahren im ersten oder einem anderem Betriebsmodus voraussichtlich ergebende Verbrauchsvorteil ist; und
> 2. der voraussichtliche Bedarf an elektrischer Energie für ein Durchfahren des betreffenden Routenabschnitts im zweiten Betriebsmodus.

Anschließend ist, wie bereits erwähnt, eine Optimierungsaufgabe zu lösen, die darin besteht, diejenigen Routenabschnitte herauszusuchen, bei denen in Summe der Verbrauchsvorteil gegenüber einem Befahren im ersten oder einem anderen Betriebsmodus maximal ist, wobei die Randbedingung zu berücksichtigen ist, dass der für das Durchfahren der identifizierten Routenabschnitte erforderliche Bedarf an elektrischer Energie höchstens so groß sein darf wie die im Energiespeicher des Fahrzeugs vorhandene bzw. zulässigerweise abrufbare elektrische Energie.

Zum Lösen einer derartigen Optimierungsaufgabe gibt es verschiedene bekannte Algorithmen, wie z. B. den Bellman-Ford-Algorithmus, den Greedy-Algorithmus o. ä.

Eine relativ einfache, ingenieurmäßige Heuristik zur Behandlung des Optimierungsproblems könnte darin bestehen, jedem der i Routenabschnitte einen Koeffizienten $k_i$ zuzuordnen, der durch das Verhältnis des Verbrauchsvorteils eines Durchfahrens im zweiten Betriebsmodus gegenüber einem Durchfahren im ersten oder einem anderem Betriebsmodus ($\Delta v_i$) und der für ein Durchfahren im zweiten Betriebsmodus benötigten elektrischen Energie beschrieben ist, d. h.

$$k_i = \left( \frac{\Delta v_i}{E_i} \right)$$

Eine einfache, d. h. mit geringem Rechenaufwand verbundene Herangehensweise bestünde darin, diejenigen Routenabschnitte elektrisch zu durchfahren, bei denen die Koeffizienten $k_i$ am größten sind und für die die im Fahrzeug gespeicherte elektrische Energie ausreicht. Ausdrücklich erwähnt sein, dass es sich hierbei um eine Heuristik handelt, d. h. nicht um eine Lösung, die in jedem Fall mathematisch optimal ist.

Zusammenfassend werden mit der Erfindung folgende Vorteile erreicht:

- Es handelt sich um sehr langfristiges, insbesondere für Plug-in-Fahrzeuge geeignetes Vorschauverfahren,

- die Möglichkeit einer Voranalyse der Fahrtroute vermeidet rechenintensive Operationen in Steuergeräten.

**Patentansprüche**

1. Verfahren zum Betreiben eines Hybridantriebs, der wahlweise mindestens in einem ersten, rein verbrennungsmotorischen Betriebsmodus, oder einem zweiten, rein elektromotorischen Betriebsmodus betreibbar ist, wobei vor Beginn einer Fahrt die von einem Start zu einem Ziel führende Fahrtroute feststeht,
**dadurch gekennzeichnet, dass**

> - die gesamte Fahrtroute nach einer vorgegebenen Logik in mehrere Routenabschnitte zerlegt wird,
> - aus den Routenabschnitten diejenigen Routenabschnitte selektiert werden, die aufgrund bestimmter Routenabschnittskriterien überhaupt für ein Befahren im zweiten Betriebsmodus in Betracht kommen,
> - aus den selektierten Routenabschnitten diejenigen identifiziert und im zweiten Betriebsmodus durchfahren werden, bei denen ein Durchfahren im zweiten Betriebsmodus in Summe einen maximalen Verbrauchsvorteil gegenüber einem Befahren im ersten oder in einem anderen Betriebsmodus erbringt.

2. Verfahren nach Anspruch 1, **dadurch gekennzeichnet, dass** unabhängig von der Länge der Fahrtroute stets die gesamte Fahrtroute analysiert wird.

3. Verfahren nach Anspruch 1 oder 2, **dadurch gekennzeichnet, dass** das Ziel von einem Fahrer durch Eingabe über ein Navigationssystem vorgegeben wird.

4. Verfahren nach einem der Ansprüche 1 bis 3, **dadurch gekennzeichnet, dass** das Identifizieren unter Berücksichtigung der Randbedingung erfolgt, dass die für das Durchfahren im zweiten Betriebsmodus in Summe voraussichtlich erforderliche elektrische Energie kleiner ist als die in einem mitgeführten elektrischen Energiespeicher gespeicherte und zulässigerweise abrufbare Energie, insbesondere als die am Start im elektrischen Energiespeicher gespeicherte und zulässigerweise abrufbare elektrische Energie.

5. Verfahren nach einem der Ansprüche 1 bis 3, **da-**

**durch gekennzeichnet, dass** für jeden selektierten Routenabschnitt ermittelt wird:

- der sich bei einem Durchfahren im zweiten Betriebsmodus gegenüber einem Durchfahren im ersten oder einem anderen Betriebsmodus voraussichtlich ergebende Verbrauchsvorteil und
- der voraussichtliche Bedarf an elektrische Energie für ein Durchfahren des betreffenden Routenabschnitts im zweiten Betriebsmodus.

6.  Verfahren nach einem der Ansprüche 1 bis 5, **dadurch gekennzeichnet, dass** für die die Fahrtroute bildenden Routenabschnitte die jeweils erwartete Durchschnittsgeschwindigkeit nach einer vorgegebenen Logik ermittelt wird.

7.  Verfahren nach Anspruch 6, **dadurch gekennzeichnet, dass** die erwartete Durchschnittsgeschwindigkeit als Entscheidungskriterium verwendet wird, ob ein betreffender Routenabschnitt für ein Durchfahren im zweiten Betriebsmodus überhaupt in Betracht kommt.

8.  Hybridfahrzeug mit einer Steuerelektronik, umfassend Mittel zur Ausführung des Verfahrens nach einem der Ansprüche 1 bis 7

**Claims**

1.  A method for operating a hybrid drive which can be operated selectively at least in a first operating mode powered purely by internal combustion engine, or in a second operating mode powered purely by electric motor, wherein prior to commencing a journey the journey route running from a start to a destination is established,
    **characterised in that**

    - the entire journey route is broken down into a plurality of route sections in accordance with a specified logic,
    - from the route sections, those route sections which on the basis of certain route section criteria are considered at all for being driven through in the second operating mode are selected,
    - from the selected route sections, those for which driving through them in the second operating mode in total yields a maximum consumption advantage compared with driving through them in the first or in another operating mode are identified and driven through in the second operating mode.

2.  A method according to Claim 1, **characterised in that** the entire journey route is always analysed regardless of the length of the journey route.

3.  A method according to Claim 1 or Claim 2, **characterised in that** the destination is specified by a driver by inputting via a navigation system.

4.  A method according to one of Claims 1 to 3, **characterised in that** the identification takes place by taking into account the boundary condition that the total of the electrical energy estimated to be necessary for driving through in the second operating mode is less than the energy which is stored in an onboard electrical energy accumulator and can be permissibly retrieved, especially as the electrical energy which is stored in the electrical energy accumulator and can be permissibly retrieved at the start.

5.  A method according to one of Claims 1 to 3, **characterised in that** there is ascertained for each selected route section:

    - the consumption advantage estimated to be yielded on driving through it in the second operating mode compared with driving through it in the first or another operating mode, and
    - the estimated electrical energy requirement for driving through the route section in question in the second operating mode.

6.  A method according to one of Claims 1 to 5, **characterised in that** for the route sections forming the journey route the expected average speed in each case is ascertained in accordance with a specified logic.

7.  A method according to Claim 6, **characterised in that** the expected average speed is used as a criterion to decide whether a route section in question is considered at all for driving through in the second operating mode.

8.  A hybrid vehicle with control electronics, comprising means for implementing the method according to one of Claims 1 to 7.

**Revendications**

1.  Procédé de gestion d'un entraînement hybride qui peut sélectivement être entraîné au moins dans un premier mode de fonctionnement purement thermiquement motorisé et dans un second mode de fonctionnement purement électro-motorisé selon lequel avant le début d'un voyage on détermine le trajet conduisant d'un point de départ à une destination, **caractérisé en ce qu'**

    - on décompose la totalité du trajet selon une logique prédéfinie en plusieurs segments de trajet,

- parmi les segments de trajet on sélectionne ceux qui, sur le fondement de critères de segments de trajet définis entrent principalement en ligne de compte pour un déplacement dans le second mode de fonctionnement, et

- parmi les segments de trajet sélectionnés, on identifie et parcourt dans le second mode de fonctionnement ceux pour lesquelles un parcours dans le second mode de fonctionnement aboutit globalement à, un avantage maximum du point de vue de la consommation par rapport à un déplacement dans le premier mode de fonctionnement ou dans un autre mode de fonctionnement.

2. Procédé conforme à la revendication 1, **caractérisé en ce qu'** on analyse toujours la totalité du trajet, indépendamment de sa longueur.

3. Procédé conforme à la revendication 1 ou 2, **caractérisé en ce que** la destination prédéfini par le conducteur, suite à son entrée, dans un système de navigation.

4. Procédé conforme à l'une des revendications 1 à 3, **caractérisé en ce que** l'identification est effectuée en prenant en considération la condition additionnelle que l'énergie électrique nécessaire globalement prévisible pour le parcours dans le second mode de fonctionnement soit inférieure à l'énergie électrique accumulée dans un accumulateur d'énergie électrique embarqué et pouvant être récupérée, en particulier à l'énergie électrique accumulée dans l'accumulateur d'énergie électrique au démarrage et pouvant être récupérée.

5. Procédé conforme à l'une des revendications 1 à 3, **caractérisé en ce que** pour chaque segment de trajet sélectionné :

- on détermine l'avantage du point de vue de la consommation, prévisible résultant d'un parcours dans le second mode de fonctionnement par rapport à un parcours dans le premier mode de fonctionnement ou dans un autre mode de fonctionnement, et

- la consommation en énergie électrique prévisible pour un parcours du segment de trajet concerné dans le second mode de fonctionnement.

6. Procédé conforme à l'une des revendications 1 à 5, **caractérisé en ce que** pour les segments de trajet formant le trajet, on détermine les vitesses moyennes attendues selon une logique prédéfinie.

7. Procédé conforme à la revendication 6, **caractérisé en ce qu'** on utilise la vitesse moyenne attendue en tant que critère de décision pour déterminer si un segment de trajet concerné entre principalement en ligne de compte pour un parcours dans le second mode de fonctionnement.

8. Véhicule hybride équipé d'une électronique de commande comprenant des moyens permettant la mise en oeuvre du procédé conforme à l'une des revendications 1 à 7.

**IN DER BESCHREIBUNG AUFGEFÜHRTE DOKUMENTE**

**In der Beschreibung aufgeführte Patentdokumente**

- US 20060278449 A
- DE 102008056858 A
- DE 102009000043 A1
- EP 1270303 A
- WO 2010058267 A
- DE 102006033930 A1